# EUROPÄISCHE PATENTANMELDUNG

(11) **EP 0 807 540 A2**
(43) Veröffentlichungstag der Anmeldung: **19.11.1997**
(21) Anmeldenummer: 97107539.5
(22) Anmeldetag: 07.05.1997
(51) Int. Cl.: B60B 33/00

(54) **Nachlaufrad**

(30) Priorität: 13.05.1996 US 645365
(71) Anmelder: DEERE & COMPANY, Moline Illinois 61265-8098 (US)
(72) Erfinder: Goman, Gerald Eugene, Horicon, Wisconsin 53032 (US)
(74) Vertreter: Feldmann, Bernhard

(57) **Zusammenfassung**

Ein Nachlaufrad mit einem vertikalen Schwenkzapfen (20), der in einer in einem Befestigungsteil (24) vorgesehenen Öffnung (22) drehbar angeordnet ist, hat, um die Gefahr des unkontrollierten Kreiselns zu vermeiden, einen unter Federwirkung stehenden Anschlagteil (36), der gegen den Schwenkzapfen (20) bzw. gegen den inneren Umfang der Öffnung (22) zur Anlage bringbar ist.

## Beschreibung

Die Erfindung bezieht sich auf ein Nachlaufrad mit einem vertikalen Schwenkzapfen, der in einer in einem Befestigungsteil vorgesehenen Öffnung drehbar angeordnet ist.

Dieses bekannte Nachlaufrad (US-A-4 854 112) ist eines der Stützräder für eine Schneideinheit eines Rasenmähers. Bekanntlich schwenken derartige Räder mit, wenn der Mäher seine Fahrtrichtung beispielsweise bei Kurvenfahten ändert. Da die Nachlaufräder dann mitschwenken, sind Rasenbeschädigungen eher selten. Andererseits haben derartige Nachlaufräder die Eigenart, dass sie zu einem Kreiseln neigen, wenn sie vom Boden abgehoben sind. Bei der Verwendung dieser Nachlaufräder an Schneideinheiten kommt es natürlich häufig vor, dass die Räder keinen Bodenkontakt haben, beispielsweise dann, wenn die Schneideinheit hochgeschwenkt wurde. Dann kreiselnde Nachlaufräder verursachen lästige Geräusche. Um die Gefahr des Kreiselns zu reduzieren sind bereits sogenannte Spannkappen vorgeschlagen worden. Diese verhindern aber nicht, dass, wenn das Nachlaufrad wieder Bodenberührung hat, das Nachlaufrad eine Stellung einnimmt, die der gewünschten Fahrtrichtung nicht entspricht. Das Rad dreht sich auf dem Boden in die richtige Richtung bei einem Anfahren, wobei dann Oberflächenbeschädigungen auftreten, was im Fall von Golfplätzen im höchsten Maß unerwünscht ist.

Die mit der Erfindung zu lösende Aufgabe wird nach einem ersten Aspekt darin gesehen, bei pendelnden Nachlaufrädern die Gefahr des Kreiseln zumindest zu reduzieren, weshalb nach der Erfindung zunächst ein unter Federwirkung stehender Anschlagteil vorgesehen ist, der gegen den Schwenkzapfen bzw. gegen den inneren Umfang der Öffnung zur Anlage bringbar ist. Auf diese Weise wirkt der Anschlagteil wie eine Laufbremse, die ein kreiselndes Nachlaufrad, sofort zum Stillstand bringt, wenn es überhaupt zu einem Kreiseln kommen sollte.

Nach einem werteren Aspekt der Erfindung soll nicht nur das Kreiseln verhindert werden, sondern auch die Möglichkeit geschaffen werden, dass das Nachlaufrad in einer vorgegebenen Stellung, die in der Regel der Geradeausfahrt entspricht, wieder Bodenberührung bekommt. Hierzu ist vorgesehen, dass der Anschlagteil gegen eine Rastfläche zur Anlage bringbar ist, wobei Anschlagteil und Rastfläche zueinander relativ drehbar und an dem Befestigungsteil und Schwenkzapfen vorgesehen sind. Die Rastfläche bestimmt dabei die vorgegebene Stellung, in der das Nachlaufrad gehalten wird. Die Rastfläche ist dabei so ausgebildet, dass der Anschlagteil bei Kontakt mit der Rastfläche das Nachlaufrad in die vorherbestimmte Stellung zwingt.

Die Rastfläche kann in einfacher Weise dadurch gebildet werden, dass die Mantelfäche des Schwenkzapfens mit einer Abflachung versehen ist, gegen die der Anschlagteil zur Anlage bringbar ist, wobei der Anschlagteil aus einer federbelasteten Kugel bestehen kann, die im montierten Zustand zusammen mit der Feder in einer in den Befestigungsteil eingearbeiteten Bohrung vorgesehen ist und gegen den Schwenkzapfen drückt.

Andererseits ist es aber im Rahmen der Erfindung auch möglich, dass die den Schwenkzapfen aufnehmende Öffnung mit einem ausgesparten Abschnitt, der dann die Rastfläche bildet, versehen ist, gegen den der Anschlagteil anliegt. Dabei ist der ausgesparte Abschnitt praktisch als Vertiefung mit rampenförmigen Kanten ausgebildet, die den Schwenkzapfen in die vorgegebene Position zwingen, wobei der Schwenkzapfen mit einer Radialbohrung versehen ist, die den aus einer federbelasteten Kugel bestehenden Anschlagteil zusammen mit der Feder aufnimmt.

Im Rahmen der Erfindung kann das Nachlaufrad an einem Mähwerk eines Rasenmähers vorgesehen sein, weil sich die Vorteile des erfindungsgemäßen Nachlaufrades bei Rasenmähern besonders positiv auswirken.

In der Zeichnung ist ein nachfolgend näher erläutertes Ausführungsbeispiel der Erfindung in zwei Varianten dargestellt. Es zeigt:
- Fig. 1: einen Großflächenrasenmäher mit mit Nachlaufrädern ausgerüsteten Schneideinheiten in schematischer Darstellung,
- Fig. 2: ein gegen Kreiseln festellbares Nachlaufrad in größerern Maßstab,
- Fig. 3: den in einen Befestigungsteil eingesetzten Vertikalbolzen des Nachlaufrades im Schnitt und in vorgegebener Geradeausstellung,
- Fig. 4: eine ähnliche Darstellung wie in Fig. 3, wobei jedoch das Nachlaufrad aus seiner Geradeausstellung verschwenkt ist,
- Fig. 5: einen gegen den Schwenkbolzen anliegenden federbelasteten Anschlagteil in Form einer Kugel und
- Fig. 6: einen gegen den inneren Umfang der den Schwenkbolzen aufnehmenden Bohrung anliegenden federbelasteten Anschlagteil.

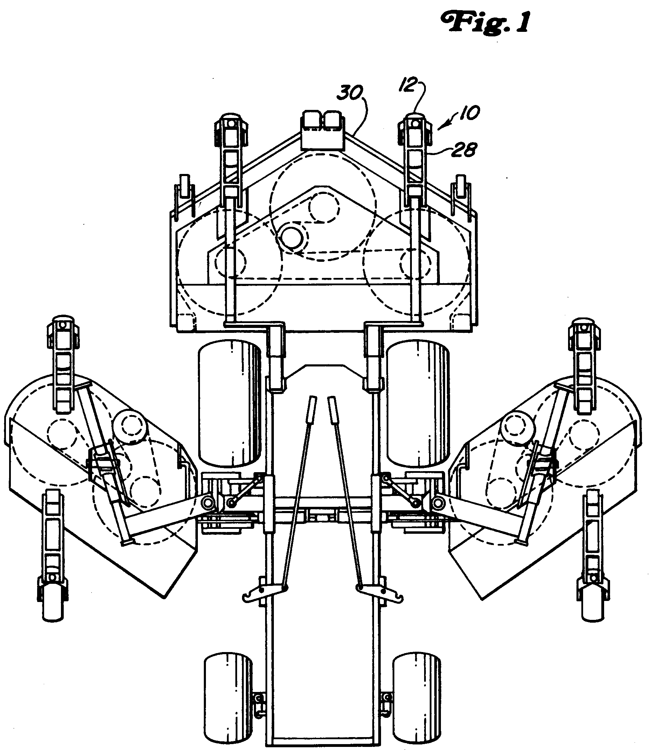

In Fig. 1 der Zeichnung ist ein Großflächenrasenmäher mit Sichelmähwerken schematisch dargestellt. Derartige Rasenmäher haben eine relativ große Arbeitsbreite, und die außenliegenden Seitenmähwerke können in eine Transportstellung hochgeklappt werden. Das bevorzugte Ausführungsbeispiel befasst sich aber weniger mit dem Großflächenrasenmäher sondern mehr mit einer Pendel- oder Nachlaufradanordnung 10 für die einzelnen Mähwerke, seien sie nun seitlich angebracht oder vorne vor dem Fahrzeug. Im einzelnen ist der auf dem Boden ablaufende Reifen mit 12, ein den Reifen aufnehmender Naben-Felgenteil mit 14 und die Radachse mit 16 bezeichnet. An der Radachse 16 greift eine Gabel 18 an, die in üblicher Weise mit dem Vertikalbolzen bzw. vertikalen Schwenkzapfen 20 versehen ist. Der Vertikalbolzen 20 ist in einer Öffnung 22 drehbar, die in einem Befestigungsteil 24 vorgesehen ist. Der Befestigungsteil 24 seinerseits ist über Schrauben 26 mit Auslegern 28 verbunden, die eine aus vier Streben bestehende Gestängeverbindung zwischen dem Befestigungsteil 24 und einem Mähwerksgehäuse 30 schaffen.

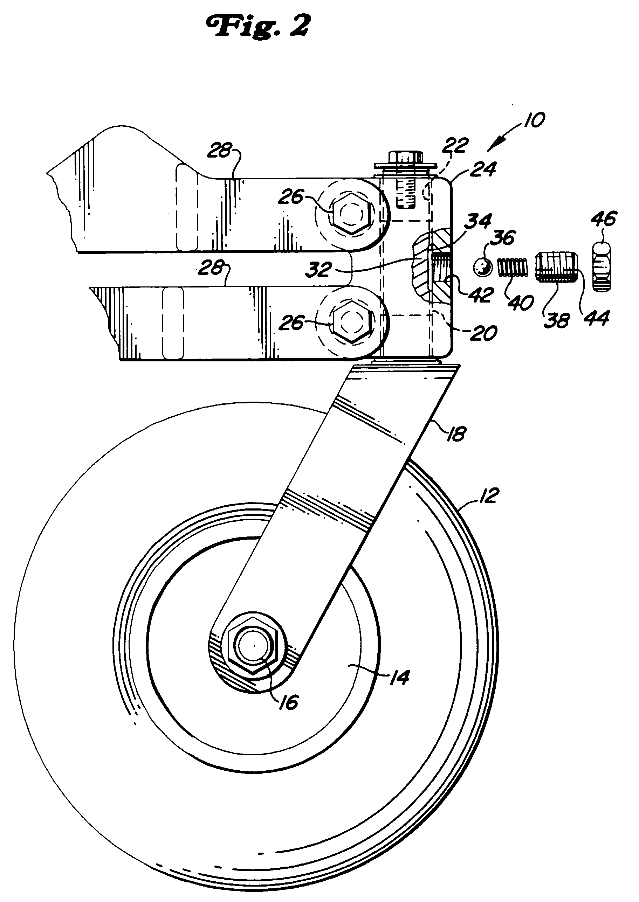

Bei dem bevorzugten Ausführungsbeispiel ist ein Mechanismus vorgesehen, der ein Kreiseln des Pendelrades 12 verhindert, wenn dieses vom Boden abgehoben ist. Dieser Mechanismus hält das Pendelrad im wesentlichen in seiner nach vorne orientierten Stellung. Die Vertikalwelle 20 ist fast auf ihrer gesamten Länge im Querschnitt rund. Der runde Querschnitt ist mit 32 bezeichnet, wobei, wie aus den Fig. 2 bis 5 zu erkennen ist, in einem bestimmten Bereich eine Abflachung 34 vorgesehen ist. Ein Anschlagteil oder eine Kugel 36 ist in einem Gewindeteil 38 angeordnet und wird über einen Druckteil, wie eine Druckfeder 40 gegen die Vertikalwelle 20 gedrückt. Der Gewindeteil 38 ist in eine in dem Befestigungsteil 24 vorgesehene Gewindebohrung 42 einschraubbar. Außerdem ist der Gewindeteil 38 mit einer Zentralbohrung 44 ausgestattet, die die Feder 40 und teilweise die Kugel 36 aufnimmt. An dem der Kugel abgelegenen Ende ist die Zentralbohrung über eine Mutter 46 verschließbar und verhindert damit im montierten Zustand ein Herausfallen von Kugel und Feder.

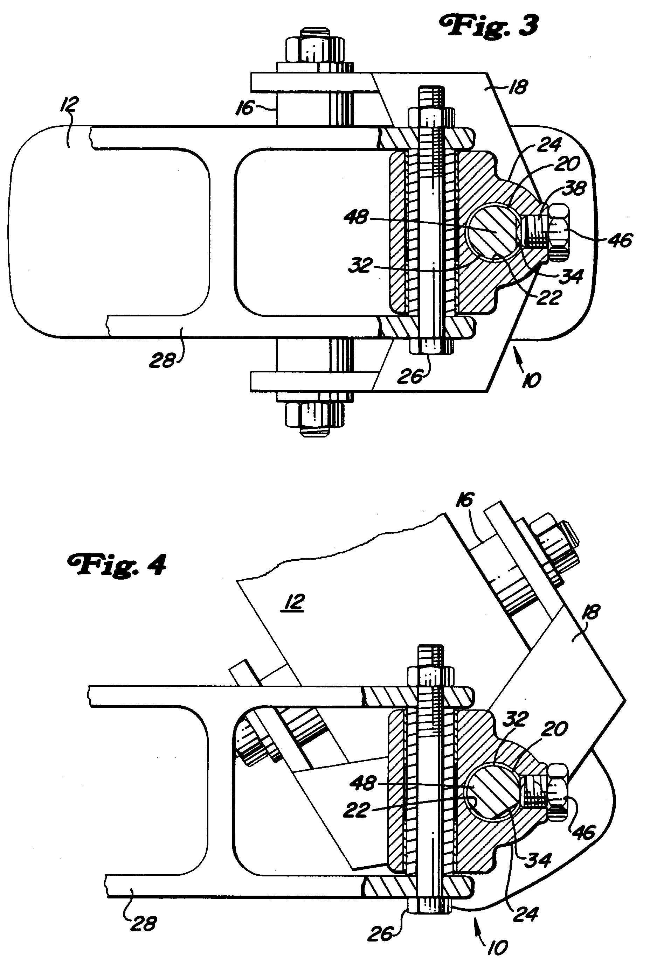

Im normalen Arbeitseinsatz rollt das Pendelrad 12 auf der Bodenoberfläche ab bzw. hat mit dieser Kontakt. Durchfährt der Rasenmäher eine Kurve, dann verschwenkt das Pendelrad um seine Vertikalachse, so dass der Reifen 12 weiter Bodenkontakt hat, ohne zu radieren oder die Grasnarbe zu verletzen. Wenn das Pendelrad verschwenkt, dreht sich die Vertikalwelle 20 in der Öffnung 22 im Befestigungsteil 24. Wenn der Rasenmäher seine Geradeausfahrt ändert, dreht sich die Vertikalwelle 20 aus ihrer in den Fig. 2 und 3 gezeigten Stellung, in der die Abflachung 34 nach vorne orientiert ist. Bei einem anfänglichen Drehen der Abflachung 34 wird die Kugel 36 in die Zentralbohrung 44 des Gewindeteils in Richtung auf die Mutter 46 gedrängt, wobei die Feder 40 zusammengedrückt wird. Bei einem weiteren Drehen der Vertikalwelle wird die Kugel schließlich gegen den kreisrunden Teil 32 der Vertikalwelle zur Anlage kommen, wie es in Fig. 4 angedeutet ist. Bei dem bevorzugten Ausführungsbeispiel kann damit das Pendelrad bei Kurvenfahrten durch einen großen Bewegungsbereich schwenken, wobei der Reifen 12 seinen Bodenkontakt beibehält.

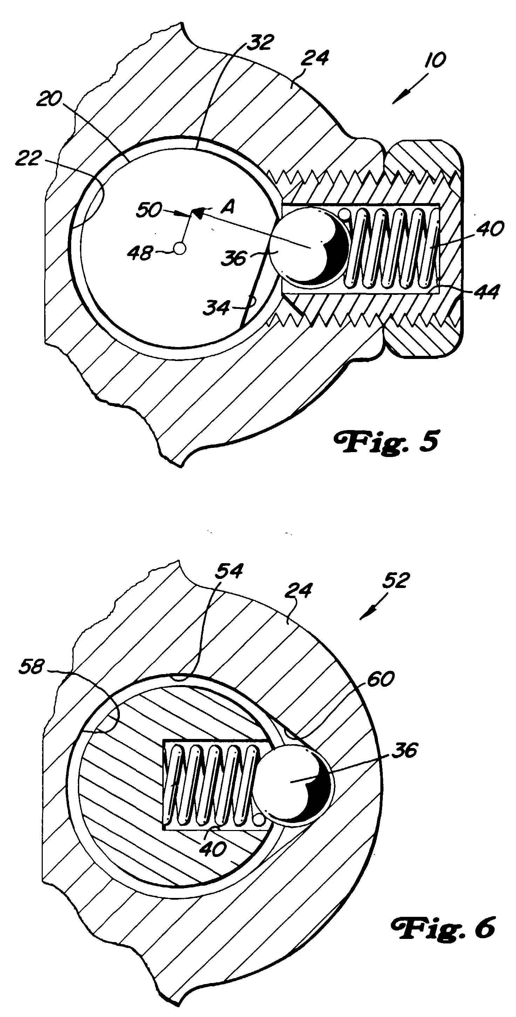

Bei dem vorliegenden Ausführungsbeispiel ist das Pendelrad auch daran gehindert zu kreiseln, da der Federmechanismus die Vertikalwelle in der nach vorne ausgerichteten Stellung nach Fig. 3 halten will. Ein Kreiseln kann auftreten, wenn das Pendelrad vom Boden abgehoben ist, beispielsweise bei einem Hochschwenken oder Anheben eines Mähwerkes. In einem solchen Fall können Kräfte auftreten, die das Pendelrad umlaufen oder kreiseln lassen. Beginnt die Vertikalwelle bei ausgehobenem Mähwerk zu drehen, dann wird sie irgendwann die Stellung nach Fig. 5 einnehmen, beispielsweise wenn sie etwas aus der Stellung nach Fig. 3 gedreht wurde. In der Stellung nach Fig. 5 drückt die Abflachung 34 die Kugel 36 nach außen, wobei die Druckfeder 40 leicht zusammen gepresst wird. Die Feder wird dabei aber auf die Kugel eine Gegenkraft in Richtung auf die Oberfläche der Vertikalwelle ausüben, und zwar in Richtung des Pfeiles A, also senkrecht zur Abflachung 34. Da die Kraft A damit nicht auf die Zentralachse 48 der Vertikalwelle 20 gerichtet ist, entsteht ein Kraftarm 50, so dass die Vertikalwelle in ihre Stellung nach Fig. 3 zurück gedreht wird. In der Stellung nach Fig. 3 ist dann die Kraft A auf die Zentralachse 48 gerichtet und die Vertikalwelle wird in dieser Stellung gehalten.

In Fig. 6 ist ein weiteres Ausführungsbeispiel 52 dargestellt. Bei diesem Ausführungsbeispiel sind die Feder 40 und ein Teil der Kugel 36 nach der Darstellung in Fig. 6 in einer Bohrung in der Vertikalwelle angeordnet. Damit wird die Kugel 36 durch die Feder 40 nach außen gegen den inneren Umfang 54 der die Vertikalwelle des Pendelrades aufnehmenden Bohrung im Befestigungsteil 24 gedrückt. Wie aus Fig. 6 erkennbar ist, ist diese Bohrung im wesentlichen rund, wobei der runde Abschnitt mit 58 bezeichnet ist. Der runde Abschnitt wird durch einen ausgesparten Abschnitt 60 unterbrochen, der rampenähnliche Seiten aufweist, damit die Kugel auch wieder austreten kann. Durchfährt nun der Mäher eine Kurve, dann verschwenkt wiederum das Pendelrad, wobei dessen Vertikalwelle sich dreht. Dabei wird die Kugel gegen die Wirkung der Feder 40 aus dem vertieften Abschnitt 60 gedrückt. Die Feder bleibt zusammengedrückt, solange die Kugel 36 gegen den runden Abschnitt 58 anliegt. Die dann gegen den inneren Umfang wirkende Kraft ist so groß, dass ein Kreiseln verhindert wird. Sollte dennoch ein Kreiseln auftreten, so kommt die Kugel wieder in den ausgesparten Bereich 60, wo die Feder entspannt und wieder zusammengedrückt wird. Das Zusammendrücken absorbiert Energie, was dazu beiträgt, dass das Pendelrad zum Stillstand kommt.

Auch bei der Ausführung nach Fig. 5 wird das Pendelrad nach einem leichten Einschlag wieder in seine nach vorne gerichtete Stellung zurückgeführt und auch dort gehalten. Verdreht sich die Vertikalwelle etwas aus ihrer Stellung nach Fig. 6, dann wird die Kugel gegen die Feder gedrückt, wenn die Seitenkanten des ausgesparten Abschnittes 60 die Kugel nach innen drücken. Die Feder erzeugt dabei natürlich einen Gegendruck, der die Kugel nach außen drückt. Infolge der Seitenkanten des ausgesparten Abschnittes entsteht eine Kraftrichtung, die nicht durch die Zentralachse der Vertikalwelle verläuft und damit ein Kraftarm, der die Vertikalwelle in ihre Position nach Fig. 6 zurückdreht. In der Stellung nach Fig. 6 verläuft die Kraftrichtung wieder durch die Zentralachse, so dass das Pendelrad in dieser Stellung gehalten werden kann.

## Patentansprüche

1. Nachlaufrad mit einem vertikalen Schwenkzapfen (20), der in einer in einem Befestigungsteil (24) vorgesehenen Öffnung (22) drehbar angeordnet ist, gekennzeichnet durch einen unter Federwirkung stehenden Anschlagteil (36), der gegen den Schwenkzapfen (20) bzw. gegen den inneren Umfang der Öffnung (22) zur Anlage bringbar ist.

2. Nachlaufrad nach Anspruch 1, dadurch gekennzeichnet, dass der Anschlagteil (36) gegen eine Rastfläche zur Anlage bringbar ist, wobei Anschlagteil (36) und Rastfläche zueinander relativ drehbar und an dem Befestigungsteil (24) und Schwenkzapfen (20) vorgesehen sind.

3. Nachlaufrad nach Anspruch 2, dadurch gekennzeichnet, dass die Mantelfäche des Schwenkzapfens (20) mit einer Abflachung (34) versehen ist, gegen die der Anschlagteil (36) zur Anlage bringbar ist.

4. Nachlaufrad nach Anspruch 3, dadurch gekennzeichnet, dass der Anschlagteil aus einer federbelasteten Kugel (36) besteht, die im montierten Zustand zusammen mit der Feder (40) in einer in dem Befestigungsteil (24) eingearbeiteten Bohrung vorgesehen ist und gegen den Schwenkzapfen (20) drückt.

5. Nachlaufrad nach Anspruch 2, dadurch gekennzeichnet, dass die den Schwenkzapfen (20) aufnehmende Öffnung mit einem ausgesparten Abschnitt (60) versehen ist, gegen den der Anschlagteil (36) anliegt.

6. Nachlaufrad nach Anspruch 5, dadurch gekennzeichnet, dass der Schwenkzapfen (20) mit einer Radialbohrung versehen ist, die den aus einer federbelasteten Kugel (36) bestehenden Anschlagteil zusammen mit der Feder (40) aufnimmt.

7. Nachlaufrad nach einem oder mehreren der vorherigen Ansprüche, dadurch gekennzeichnet, dass das Nachlaufrad an einem Mähwerk eines Rasenmähers vorgesehen ist.
